Europäisches Patentamt

European Patent Office

Office européen des brevets

(19)

(11) Publication number: 0 431 398 A2

(12) **EUROPEAN PATENT APPLICATION**

(21) Application number: 90122239.8

(22) Date of filing: 21.11.90

(51) Int. Cl.5: **G01N 25/00, G05D 23/00**

(30) Priority: 04.12.89 US 445463

(43) Date of publication of application:
12.06.91 Bulletin 91/24

(84) Designated Contracting States:
DE FR GB IT

(71) Applicant: MILES INC.
1127 Myrtle Street
Elkhart,IN 46515(US)

(72) Inventor: Flora, Bruce A.
56961 Pearl Ann Drive
Elkhart, Indiana 46514(US)

(74) Representative: Kirchner, Dietrich, Dr. et al
c/o BAYER AG Konzernverwaltung RP
Patentabteilung
W-5090 Leverkusen, Bayerwerk(DE)

(54) Heating device with a phase change temperature controller.

(57) A heating device demonstrating an im proved temperature control and a method of main taining a steady-state temperature at an essenti ally constant value are disclosed. The heating device comprises a thermally-conductive chamber containing a material capable of undergoing a phase change at or near the desired steady-state temperature. The heating device is useful in a variety of applications, and especially applica tions requiring the maintenance of a steady-state temperature over relatively long time periods, such as in diagnostic assays of bio logical fluids, like the hemoglobin $A_{lc}$ (HbA$_{lc}$) assay of whole blood.

FIG.7

EP 0 431 398 A2

# HEATING DEVICE WITH A PHASE CHANGE TEMPERATURE CONTROLLER

## FIELD OF THE INVENTION

The present invention relates to an improved heating device that maintains a steady-state temperature at an essentially constant value over a relatively long time period. More particularly, the present invention is directed to a heating device comprising a thermally-conduc tive chamber containing a material capable of undergoing a phase change at or near the desired steady-state temperature. Preferably, the materi al undergoes a phase change over a narrow tempera ture range, such as over a range of about $1C°$ or less. The heating device provides a steady-state temperature that fluctuates less than about $1C°$, and usually less than about $0.5C°$, between the temperature maximum and the temperature mini mum. The heating device is useful in applications that require the maintenance of an essentially constant steady-state temperature over a relative ly long time period, and especially in applica tions wherein the course of an interaction, pro ceeding at an elevated temperature, is monitored over time, such as an enzyme-catalyzed reaction or an analyte-antibody immunoreaction used in the assay of biological fluids.

## BACKGROUND OF THE INVENTION

Chemical interactions proceed more rapidly at elevated temperatures because the additional energy provides the interactants with additional kinetic energy to undergo increased and more effective physical interactions, like molecular collisions, and thereby provides the energy to overcome the activation energy barrier in chemical interactions. Consequently, interac tions of interest that proceed relatively slowly at ambient temperature proceed more rapidly at elevated temperatures, and therefore can be more readily investigated. Accordingly, the assay of a test sample for a particular analyte often is performed at an elevated temperature such that the particular analyte interacts with an analyte detection composition to show the presence or concentration of the particular analyte in the test sample within a practical time period.

Many analytes interact with an analyte detection composition too slowly at ambient tem perature to provide an analyte assay within a practical time period. Therefore, individuals skilled in the art of designing assay methods must determine a suitable elevated temperature for performing the assay. A suitable elevated temperature is sufficiently high to allow the analyte to readily interact with the analyte detection composition, and therefore provide an assay result within a reasonable time. In addi tion, the elevated temperature is not so high such that the interaction proceeds too rapidly or that the analyte or a component of the analyte detection composition, such as an enzyme, is effectively destroyed. Accordingly, those skilled in the art of designing assay methods must deter mine, experimentally, the optimum elevated tem perature for a particular assay from the particu lar physical and chemical properties of the ana lyte of interest, from the particular physical and chemical properties of the composition used to assay for the analyte of interest, and from the nature of interaction between the analyte and the composition used to assay for the analyte.

For many assays performed at elevated temperatures, maintaining the temperature precise ly at the optimum temperature for the assay is not especially critical. For example, many assays of biological fluids, such as whole blood, serum or plasma, or urine, for a particular constituent are colorimetric assays. In the colorimetric assays, a particular analyte detection composition contacts the biological fluid and interacts essen tially only with the analyte of interest. Conse quently, a color transition occurs as a result of the interaction between the analyte of interest and the analyte detection composition. The pre sence or concentration of the analyte of interest in the biological sample is determined by the degree and intensity of color transition. In turn, the degree and intensity of the color tran sition can be determined visually or instrument ally, and is quantified by a comparison to the degree and intensity of color transitions result ing from standardized solutions of the analyte of interest contacting an analyte detection com position. The comparison is provided either by a color chart for visual determinations or, for instrumental determinations, by plots of absorb ence or reflectance vs. analyte concentration.

Certain interactions between a particu lar analyte and an analyte detection composition proceed too slowly at ambient temperature to provide an assay result within a reasonable time period. Then, the analyte and analyte detection composition are allowed to interact at a predeter mined, elevated temperature for at least a minimum predetermined time to insure a complete interac tion between the analyte and the analyte detection composition. Accordingly, a complete color tran sition, or full assay response, is achieved. In these colorimetric assays, once the analyte has completely interacted with the analyte detection composi-

EP 0 431 398 A2

tion, no further color transition occurs and the assay is complete except for the determi nation and quantification of the degree and inten sity of the color transition.

Therefore, because only the degree and intensity of the color transition is used to detect or measure the concentration of the analyte of interest, it is not critical to strictly main tain the optimum assay temperature. The elevated temperature only serves to increase the interac tion rate to a sufficient extent such that an assay result is achieved within a practical time period. As long as the analyte is allowed to interact with the analyte detection composition at a sufficiently elevated temperature for a sufficient time, the interaction between the analyte and the analyte detection composition is essentially complete, and gives a complete color transition for an accurate and reliable analyte assay. If the analyte and the analyte detection composition interact for a time less than or longer than the optimum time period, or at a temperature that is above or below the prescribed optimum temperature by several degrees, an accur ate assay nevertheless will result as long as a full color transition is allowed to occur.

However, other analyte assays require that the interaction between the analyte and the analyte detection composition be conducted at a strictly controlled temperature. In these assays, the detection and measurement of the analyte of interest is not determined solely from an examina tion of the completed interaction between the analyte and the analyte detection composition for a response, such as a color transition. In contrast, these assays track, or follow, the interaction between the analyte and the analyte detection composition over time in order to accur ately detect and measure the amount of a particu lar analyte in the test sample. Accordingly, because the analyte and analyte detection composi tion interact more quickly at elevated tempera tures, the monitoring of the interaction between the analyte and the analyte detection composition over time would be inaccurate and unreliable if the temperature of the assay fluctuates too great ly. Such assays are following the rate of the analyte-analyte detection composition interaction, often by measuring the change in light absorbence or reflectance over time. Therefore, to detect the rate of interaction it is often necessary to maintain the elevated temperature at as constant a temperature as possible in order to eliminate, or substantially reduce, temperature as a variable in the assay.

As understood by one skilled in the art, when following a chemical interaction over time, maintaining a substantially constant temper ature for the particular interaction environment is particularly important since the rate of most chemical interactions generally increases with temperature. For example, in the case of enzyme-catalyzed reactions, the rate of reaction approxi mately doubles for each $10C°$ rise in temperature, within the temperature range wherein the enzyme is stable and retains full activity. Similarly, the binding kinetics of an analyte-antibody im munoreaction increases with temperature, and therefore significant differences in the rate of binding between the analyte and the antibody occur within the temperature range wherein the immunoreactions typically occur.

As will be discussed more fully in the detailed description of the invention, one assay that monitors the rate of interaction between the analyte and the analyte detection composition is for a glycated hemoglobin, i.e., hemoglobin combined with glucose, also termed $HbA_{Ic}$, by an immunoassay procedure. This assay is performed at an elevated, steady-state temperature of about $37°$ C, or $98.6°$ F, the normal body temperature of a human. Consequently, because the rate of inter action between interactants is being monitored, a more accurate and reliable $HbA_{Ic}$ assay is achieved by maintaining the assay temperature at an essentially constant $37°$ C. The greater the fluctuation of the steady-state temperature be tween the minimum temperature and the maximum temperature attained during the assay, either above or below $37°$ C, the less accurate and less reliable the assay results for $HbA_{Ic}$ become.

Presently, in performing the $HbI_{Ac}$ assay, a cartridge, including the blood sample to be assayed and the reagents necessary to assay the blood sample for $HbI_{Ac}$, is placed in contact with two electrically-heated aluminum plates maintained as closely as possible at $37°$ C. Then the rate of interaction between the blood sample and the $HbI_{Ac}$ assay reagents is followed over time. In accordance with prior art devices and methods, a proportional temperature controller maintains the temperature of the aluminum plates within about a $0.5C°$ temperature range between the maximum and minimum temperature. In contrast, an on-off temperature controller maintains the temperature of the aluminum plates between about $37.5°$ C and about $35.8°$ C, or within about a $1.7C°$ temperature range between the maximum and minimum temperature. Accordingly, any method or device that can reduce the fluctuation range between the maximum and the minimum temperature to less than about $1.7C°$, when using an on-off temperature controller, would provide a more accurate and reliable $HbA_{Ic}$ assay.

In addition, if the method or device reduced the fluctuation range between the tempera ture maximum and minimum to less than about $0.5C°$, then a more economical and simpler $HbA_{Ic}$ assay is available because on-off temperature control lers are substantially less complicated and less expensive than proportional temperature control lers. Similarly, other diagnostic assays, con ducted either at $37°$ C or

3

another elevated tempera ture, also would be more accurate, economical, reproducible and reliable if the fluctuation range between the temperature maximum and minimum achieved during the assay was reduced or elimi nated by using an on-off temperature controller.

Consequently, it has been found that replacing the aluminum plate of the prior art with a thermally-conductive chamber containing a material capable of undergoing a phase change at, or near, the desired and predetermined steady-state temperature, significantly reduces the fluctuation range between the temperature minimum and temperature maximum in assays performed at elevated temperatures. As will be discussed more fully hereinafter, the heating device of the present invention allows an assay to be per formed at an elevated steady-state temperature, wherein the steady-state temperature fluctuates by less than about 1C°, and usually fluctuates by less than about 0.5C°, between the temperature maximum and the temperature minimum. Surprisingly and unexpectedly, this precise control over the steady-state temperature is achieved by using an economical and easy-to-use on-off temperature controller.

For example, the HbA$_{Ic}$ assay of a blood sample is performed at 37°C. Therefore, the thermally-conductive chamber, such as a metal chamber, like an aluminum chamber, contains a material that undergoes a phase change at about 37°C, for example the hydrocarbon compound eico sane having a melting point of 36.8°C. Surpris ingly, replacing the aluminum plate of the prior art, with an eicosane-filled aluminum chamber provided a heating device that demonstrated an ability to control the temperature fluctuation between the temperature maximum and temperature minimum to less than about 0.5C°, such as about 0.35C°, with an on-off temperature controller. Accordingly an accurate and reliable, and more economical, HbA$_{Ic}$ assay of whole blood is achieved with a heating device of the present invention and an on-off temperature controller.

It is well-known that a solid material, when heated to its melting point, remains at its melting point during continued heating until the material has completely melted. Then, during further continued heating, the melted material increases in temperature. Conversely, a liquid material, when cooled to its freezing point, remains at its freezing point during continued cooling until the material has completely solidi fied. Then, during further continued cooling, the frozen material decreases in temperature.

In addition, if a partially-melted solid material is at its melting point, or if a partially-frozen liquid is at its freezing point, and the heating, or cooling, is discontinued, and no heat is added, or withdrawn, the solid and liquid phases will remain in equilibrium, with the rate of melting equalling the rate of freezing. This physical property helps provide the strict temperature control demonstrated by the electric heating device of the present inven tion, whereby a substantially smaller temperature fluctuation from the desired steady-state tempera ture achieved during the assay procedure provides a more accurate analyte assay.

The prior art contains various refer ences disclosing methods and devices wherein the phase change of a material was used to detect or measure a particular temperature. However, the prior art has neither taught nor disclosed utiliz ing the phase change of a material in a method or a device to control and maintain a predeter mined temperature at an essentially constant level. For example, Bowen, in U.S. Patent Nos. 4,743,120 and 4,744,671, disclosed placing paraf fin waxes having different melting points in separate compartments to detect the temperature of water or the temperature generated by an elec trical current. Each paraffin wax is an opaque solid below its melting point. However, the paraffin wax melts to provide a transparent liquid that reveals the temperature of the water or the temperature generated by electric current that is passing over the compartments holding the paraffin waxes.

Hauser, in U.S. Patent No. 4,270,039, described a temperature sensor for a heating unit including a plug filled with a wax that becomes transparent in the molten state to reveal a temperature indicator disc. Similarly, U.S. Patent No. 4,187,799 to Zwarun described a water temperature indicator including a wax that melts in response to a predetermined temperature to release a previously-encased ball that floats to the top of the temperature indicator, thereby signifying that too high of a temperature has been attained.

Nollen, in U.S. Patent Nos. 3,631,721 and 3,895,523, disclosed a thermometer having a cavity filled with a paraffinic hydrocarbon, like eicosane, heneicosane and docosane, wherein the volume expansion of the paraffinic hydrocarbon is used to measure temperature. Similarly, other patents describing the use of a phase change of a material to detect or measure temperature in clude U.S. Patent Nos. 4,044,707, 4,601,588, 3,118,774 and 3,828,612; French Patent Nos. 2,261,579 and 2,339,848; German Patent Nos. 31 03 850 and 24 03 951; and Japanese Patent Nos. 87-059441, 87-030235, 85-046522, 85-028364 and 85-011444. Each of these references utilizes the phase change of a compound or a composition in a method to detect or measure a predetermined temperature. The above-cited references do not teach or suggest, either alone or in combination, the desirability of using the phase change of a material to help maintain an essentially constant predetermined steady-state temperature over a relatively long period of time.

In contrast to the heating device of the present invention that controls and maintains an essentially constant steady-state temperature by using a phase change of a material, prior art devices utilized a phase change of a material only to detect or measure a particular tempera ture. The present-day devices used to attain an elevated temperature are electrically-heated metal plates, wherein the temperature is con trolled and maintained by a proportional tempera ture controller. As will be discussed more fully hereinafter, a proportional temperature control ler, as opposed to an on-off temperature control ler, regulates power input to the heater such that a more precise temperature control is achieved. Proportional temperature controllers generally allow the predetermined temperature to fluctuate over a range of about $0.5C^\circ$ between the minimum and maximum temperature. In contrast, on-off temperature controllers allow the predeter mined temperature to vary over a range of about $2C^\circ$. However, proportional temperature control lers are relatively expensive and require a sub stantial amount of time and effort to be cali brated, adjusted and set at the desired predeter mined temperature. Accordingly, prior to the present invention no known method or device was available to economically control and maintain a predetermined, steady-state temperature, such that the fluctuation range between the maximum and minimum temperature is less than about $1C^\circ$, and preferably less than about $0.5C^\circ$, by using an on-off temperature controller.

Therefore, in accordance with the method of the present invention, a predetermined, steady-state temperature can be controlled and maintained over a relatively long time period with an on-off temperature controller, wherein the tempera ture variation between the maximum temperature and the minimum temperature is less than about $1C^\circ$, and usually less than about $0.5C^\circ$. The heating device of the present invention comprises a conductive chamber containing a material that undergoes a phase change at or near the desired predetermined temperature. Surprisingly and unexpectedly, the heating device of the present invention provides precise temperature control, wherein the predetermined, steady-state tempera ture is maintained within a maximum-minimum tem perature fluctuation range of less than about $1C^\circ$, and usually less than about $0.5C^\circ$, even when employing a more economical and easier to operate on-off temperature controller, as opposed to the more sophisticated and costly proportional temperature controller utilized in the prior art heating devices.

Consequently, the heating device of the present invention is useful in laboratory applications that require the maintenance of a steady-state temperature over an extended time period. For example, the heating device of the present invention is especially useful in diag nostic assays that monitor the rate of interaction between an analyte and an analyte detection com position to determine the presence or concentra tion of an analyte in a test sample, like the $HbA_{Ic}$ immunoassay of biological fluids. A more precise control of the predetermined optimum interaction temperature essentially eliminates temperature as an assay variable, thereby permit ting a more accurate determination of the rate of interaction, or of the change in concentration, of analyte over time, and consequently, affording a more accurate and reliable assay.

## SUMMARY OF THE INVENTION

In brief, the present invention relates to a heating device that more precisely controls and maintains a predetermined, steady-state tem perature. More particularly, the present inven tion relates to a heating device that maintains a steady-state temperature that fluctuates less than about $1C^\circ$, and usually less than about $0.5C^\circ$, even when employing a more economical and easy-to-use on-off temperature controller. The heating device comprises a thermally-conductive chamber containing a material capable of undergoing a phase change at, or near, a predetermined steady-state temperature. Surprisingly and unexpectedly, the device of the present invention effectively and precisely maintains the predetermined steady-state temperature through the use of a simple and inexpensive on-off temperature controller as opposed to a more sophisticated, more costly and more difficult-to-use proportional temperature controller.

Therefore, it is an object of the pre sent invention to provide a heating device that effectively and precisely controls and maintains a predetermined steady-state temperature over a relatively long time period.

It also is an object of the present invention to provide a heating device that main tains a predetermined, steady-state temperature, wherein the steady-state temperature fluctuates less than about $1C^\circ$, and usually less than about $0.5C^\circ$, between the minimum and maximum temperature over a relatively long time period.

Another object of the present invention is to provide an heating device comprising a thermally-conductive chamber containing a material capable of undergoing a phase change at or near the predetermined steady-state temperature.

Another object of the present invention is to provide a heating device comprising a ther mally-conductive chamber including a material that undergoes a phase change over a relatively narrow temperature range, such as over a tempera ture range of about $1C^\circ$ or less.

5

Another object of the present invention is to provide a heating device that maintains a sufficiently precise steady-state temperature when employing an on-off temperature controller to allow the accurate determination of a rate of interaction between two chemical compounds.

Another object of the present invention is to provide a heating device that is useful in a diagnostic assay for a particular analyte in a test sample.

Yet another object of the present invention is to provide a heating device that is useful in an immunoassay for an analyte in a biological test sample.

Still another object of the present invention is to provide a heating device useful in a method to assay whole blood for hemoglobin $A_{Ic}$ (Hb$A_{Ic}$) in an immunoassay procedure.

BRIEF DESCRIPTION OF THE DRAWINGS

The above and other objects and advantages and novel features of the present invention will become apparent from the following detailed description of the invention illustrated in the accompanying figures demonstrating the improved steady-state temperature control achieved by using the heating device of the present invention wherein:

FIG. 1 is a perspective view of a prior art, electrically-heated metal slab, or plate, used to heat and maintain a test sample at a predetermined steady-state temperature for the assay of a particular analyte of interest;

FIG. 2 is a perspective view of a heating device of the present invention comprising a thermally-conductive chamber containing a material capable of undergoing a phase change at or near a predetermined steady-state temperature, and used to heat an assay and precisely maintain the assay of a test sample at a predetermined steady-state temperature;

FIG. 3 is a side view of the device of FIG. 2 taken in the direction of arrows 3-3 of FIG. 2;

FIG. 4 is a front view of the device of FIG. 2 taken in the direction of arrows 4-4 of FIG. 2;

FIGS. 5a through 5I show a cartridge used in an immunoturbidimetric assay for Hb$A_{1c}$ and the method steps used in the Hb$A_{Ic}$ assay;

FIG. 6 is a partial side view in cross-section of a device used to heat and rotate the cartridge used in the immunoturbiometric assay for Hb$A_{1c}$;

FIG. 7 is a partial side view in cross-section of a heating device of the present invention used to heat an assay cartridge and maintain an essentially constant steady-state temperature in an Hb$A_{Ic}$ immunoturbiometric assay;

FIG. 8 is a graph of temperature ($^{\circ}$C) vs. time (t) comparing a prior art electrically-heated aluminum slab to an electrically-heated aluminum chamber containing eicosane from the onset of heating (t = o) until a steady-state temperature is achieved;

FIG. 9 is an expanded form of the graph illustrated in FIG. 8;

FIG. 10 is a graph of temperature ($^{\circ}$C) vs. time (t) comparing a prior art electrically-heated aluminum slab to an electrically-heated aluminum chamber containing eicosane over a time period after the steady-state temperature has been achieved;

FIG. 11 is an expanded form of the graph illustrated in FIG. 10;

FIG. 12 is a graph of temperature ($^{\circ}$C) vs. time (t) comparing a prior art electrically-heated aluminum slab to an electrically-heated aluminum chamber containing eicosane over a time period after the electric heater has been disengaged;

FIG. 13 is an expanded form of the graph illustrated in FIG. 12;

FIG. 14 is a graph of temperature ($^{\circ}$C) vs. time (t) demonstrating that a heating device of the present invention effectively maintains a steady-state temperature over a relatively long time period after the power is disengaged from the heater and that the heating surface of the heating device provides a uniform steady-state temperature;

FIG. 15 is a graph of temperature ($^{\circ}$C) vs. time (t) demonstrating that a prior art heating device provides a temperature gradient across the heating surface of the heating device;

FIG. 16 is a graph of temperature ($^{\circ}$C) vs. time (t) further demonstrating that a heating device of the present invention maintains an essentially constant steady-state temperature over a relatively long time period; and

FIGS. I7 through 21 show alternate embodiments of the heating device of the present invention.

DETAILED DESCRIPTION OF THE INVENTION

In a variety of chemical applications, such as diagnostic assays, it is desirable, or necessary, to

EP 0 431 398 A2

maintain an elevated, and relatively constant, temperature. Generally, the increased temperature allows a particular chemical interac tion that proceeds too slowly at ambient tempera ture to proceed at a sufficient rate such that meaningful results can be achieved within a rea sonable time period. In applications that follow the rate of a reaction, such as the decrease in concentration of an interactant, the increase in concentration of an interaction product, or the change in a physical property, like light reflect ance, light absorption or turbidity, the tempera ture ideally is held essentially constant in order to eliminate temperature as a variable in the determination of the rate of interaction.

However, in practice, maintaining a constant temperature is difficult to impossible. Usually, the temperature is maintained at a con stant value by heating a relatively large volume of water or air to the desired temperature, i.e., in a water bath or an oven, and using the rela tively large volume of heated water or heated air to completely envelope a relatively small volume of interactants enclosed in a vessel. Consequently, the interactants sense an essential ly constant temperature near the center of the water bath or oven as the water or air is recir culated and heated, as necessary, at the outer edges of the water bath or oven. Temperature gradients are eliminated quickly as the heated water or air near the outer edges of the water bath or oven contacts and recirculates with the water or air in the center of the water bath or oven. In addition, compounds having high heat capacities, like water, once heated, tend to retain heat and cool slowly, thereby further providing a more constant, or less fluctuating, temperature.

However, in some laboratory applications that require an elevated and essentially constant temperature, a water bath or an oven is not a practical heating device. For example a variety of diagnostic assays performed in a medical office or in a medical laboratory require an elevated temperature. But, because of factors such as the infrequency of the assay, economics, lack of space or the method of analyte detection, practi cal considerations often dictate the use of a heating device that is smaller than, but is as efficient and accurate as, a water bath or an oven. The smaller heating devices are more easily stored when not in use, and also are more quickly heated such that assay results can be attained more quickly.

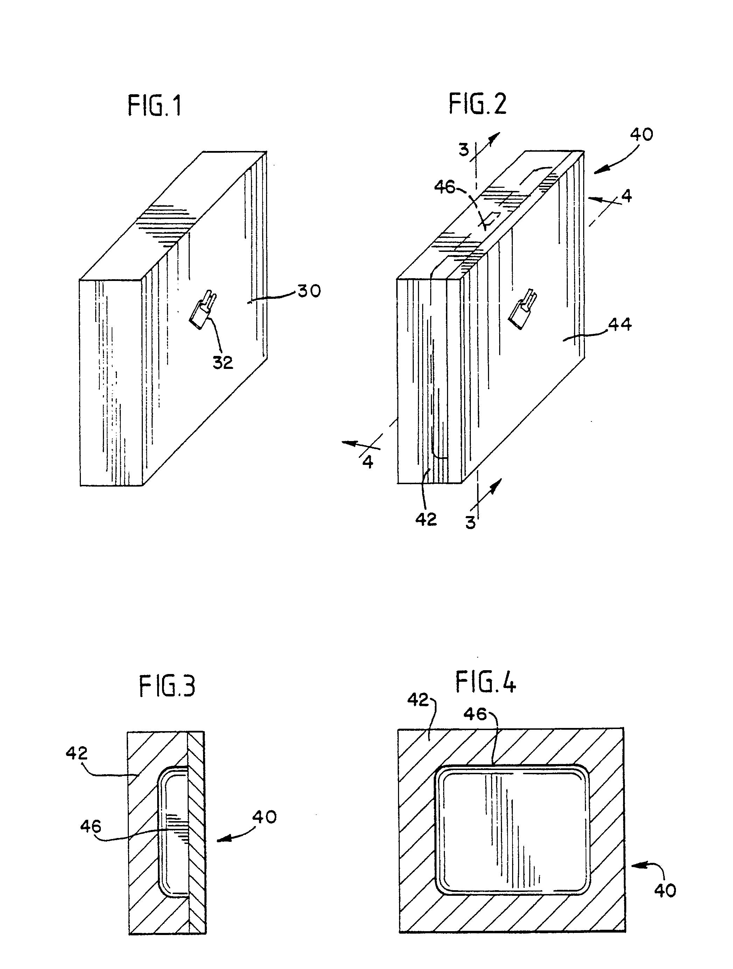

Consequently, an electrically-heated metal plate often is used to heat the assay to, and maintain the assay at, the desired predeter mined temperature. The prior art heating devices are essentially a thermally-conductive plate that is electrically-heated to a predetermined temperature. The thermally-conductive plate then is maintained as close as possible to the prede termined temperature by using a proportional temperature controller. An example of a prior art heating device is illustrated in FIG. 1, wherein a solid metal slab or plate 30, such as an aluminum plate, is heated by a resistance heater (not shown). The heating device includes a resistance temperature device (RTD) 32 to mea sure the temperature of the metal plate 30. The resistance temperature device (RTD) 32 is a tem perature measuring element wherein the resistance of the sensing material is an accurately known function of temperature. Accordingly, the resist ance of the sensing material is measured, then the resistance is correlated to the temperature of the metal plate 30. Normally the sensing material of the resistance temperature device 32 is a metal, and preferably the sensing material is platinum. The temperature of the metal plate 30 is controlled and maintained by a proportional temperature controller that supplies sufficient power to the resistance heater as needed. The proportional temperature controller provides a sufficiently constant elevated temperature to yield accurate results for assays based on the rate of an interaction, however proportional temperature controllers are difficult to adjust and calibrate, and are relatively expensive.

An example of a particular assay per formed at an elevated, and ideally essentially constant, temperature is the immunoturbidimetric assay for determining hemoglobin $A_{1c}$ (Hb$A_{1c}$) , a glycated hemoglobin derivative. In this immuno turbidimetric assay, hemoglobin in a whole blood sample first is converted into a denatured thio cyan-met-hemoglobin form that allows first for the measurement of total hemoglobin in the blood sample. Then the denatured Hb$A_{1c}$ form is measured by immunoassay. The immunoassay is based on the specific interaction of an antibody particle reagent and an agglutinator reagent.

The antibody particle reagent comprises an antibody, or a fragment thereof, that is spe cific for the glycated N-terminal peptide sequence in the beta-subunit of the denatured hemoglobin. The antibody or antibody fragment is bound to a water-suspendable particle, such as a polystyrene or other latex particle. Useful latex particles are well-known to workers skilled in the art of latex agglutination immunoassays. In general, such latex particles possess the properties neces sary to serve as a stable support for the desired antibody reagent used in the assay and to undergo sufficient agglutination for analytical purposes in the presence of an agglutinator reagent. Latex particles generally are prepared by emulsion polymerization or suspension polymerization. A variety of latex particles are commercially avail able, and polystyrene particles are particularly useful.

The covalent or noncovalent attachment of the antibody reagent to the latex particles is achieved by using well-known and conventional techniques. The antibody reagent can include whole antibodies, antibody fragments, polyfunc tional antibody aggregates, and the like, and combinations thereof. Normally, whole

7

antibody or IgG fragments such as Fab, Fab', or F(ab')₂ are employed. The antibody reagent can be derived by any available technique such as conventional antiserum and monoclonal techniques.

The agglutinator reagent comprises a plurality of epitopic binding sites for the anti body reagent and can be prepared according to techniques familiar to workers in the field of agglutination immunoassays. The reagent aggluti nator, in general terms, comprises a plurality of epitopic binding sites for the anti-analyte antibody reagent. Such sites can be provided by using the analyte itself or a suitable analog that retains sufficient capacity to be bound by the antibody for purposes of an assay. Such an analog can, in the case of a protein analyte, comprise a suitable fragment, prepared synthetic ally or by digestion, comprising the epitope for the antibody reagent, e.g., glycated peptide residues of hemoglobin $A_{lc}$.

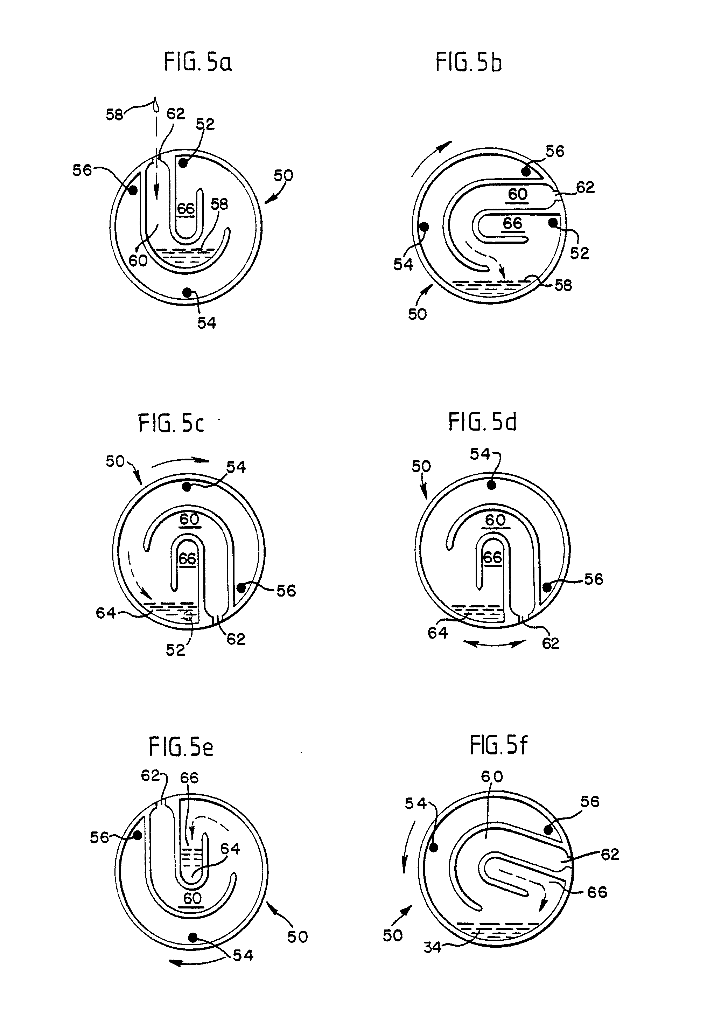

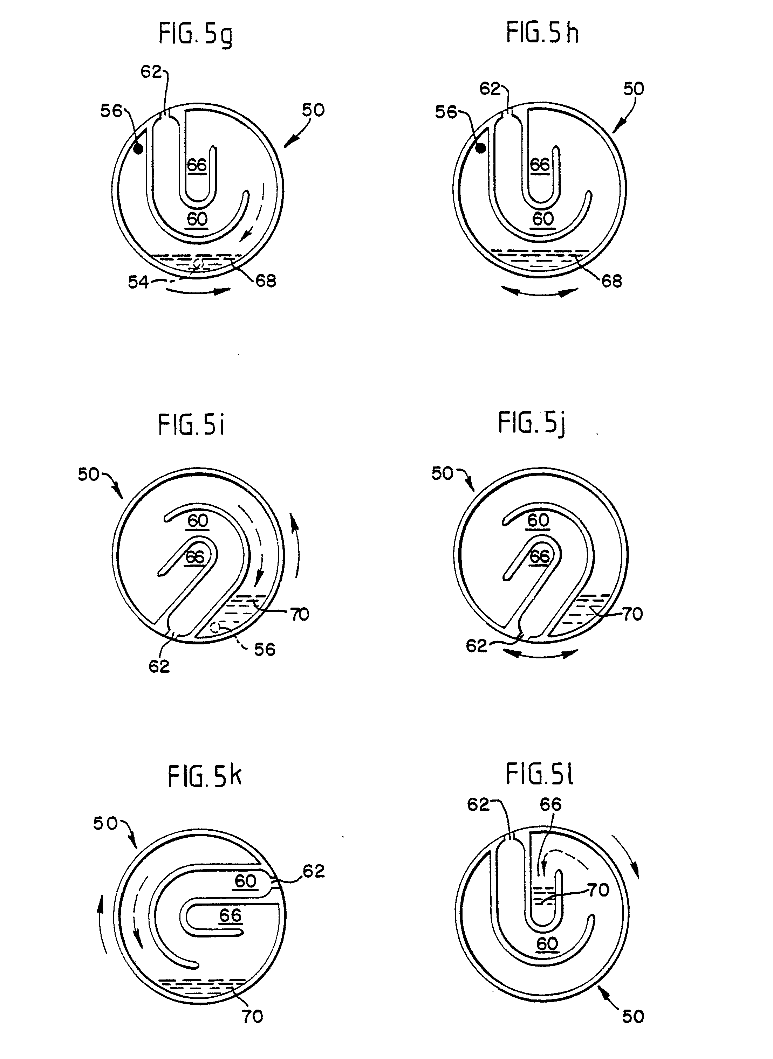

As illustrated in FIG. 5, the aforemen tioned reagents can be incorporated into a car tridge 50 in order that an immunoturbidimetric assay for $HbA_{lc}$ can be performed therein substan tially as shown in FIGS. 5a-5l. In particular, in FIG. 5a, a first reaction zone 52 can be incor porated with a dry, soluble form of a denaturant comprising a thiocyanate salt and an oxidant sufficient to convert the native hemoglobin fer rous ion to its ferric met-hemoglobin form; a second reaction zone 54 can be incorporated with a dry, suspendable form of the antibody particle reagent; and a third reaction zone 56 can be incorporated with a dry, soluble form of the agglutinator reagent. A whole blood test sample 58, or a pretreated sample thereof, is introduced into delivery chamber 60 through inlet port 62 (FIG. 5a), and brought into contact with the denaturant in first reaction zone 52 to form a first reaction mixture 64 (FIG. 5a) by rotating the cartridge 50 in a clockwise direction (FIGS. 5b-5d), and preferably incubated for from about 3 minutes to about 5 minutes, preferably at from between about 25° C and about 39° C, more preferably at about 37° C. The first reaction mixture 64 then is transported into a viewing chamber 66 by further rotating the cartridge 50 in a clockwise direction (FIG. 5e), and the total hemoglobin content is determined by measuring the absorbence thereof, preferably at about 540 nm (nanometers). The first reaction mixture 64 then is brought into contact with the antibody particle reagent in the second reaction zone 54 to form a second reaction mixture 68 by rotating the cartridge 50 first in a clockwise direction (FIG. 5f), and then in a counterclockwise direction (FIG. 5g). The second reaction mixture 68 preferably is incubated as described above, and, if desired, transported into the viewing chamber 66 by rotat ing the cartridge 50 in a clockwise direction (not shown) for a sample blank measurement. The second reaction mixture 68 is then brought into contact with the agglutinator in the third reac tion zone 56 to form a third reaction mixture 70 and incubated as described above by rotating the cartridge 50 in a counterclockwise direction (FIGS. 5i and 5j). The extent that the antibody particle and agglutinator bind to one another to form a light scattering complex is dependent on the amount of $HbA_{lc}$ present and is readily quan tified by a turbidimetric measurement.

The $HbA_{lc}$ measurement then is made by transporting the third reaction mixture 70 into the viewing chamber 66 by rotating the cartridge 50 in a clockwise direction (FIGS. 5k and 5l). The turbidity of the third reaction mixture 70 is measured by monitoring the change in light transmission over time. The turbidimetric re sponse of the third reaction mixture 70 and the total hemoglobin measurement of the first reaction mixture 64 are correlated to the amount of $HbA_{lc}$ and total hemoglobin in the sample and the percent glycated hemoglobin in the whole blood test sample then is calculated.

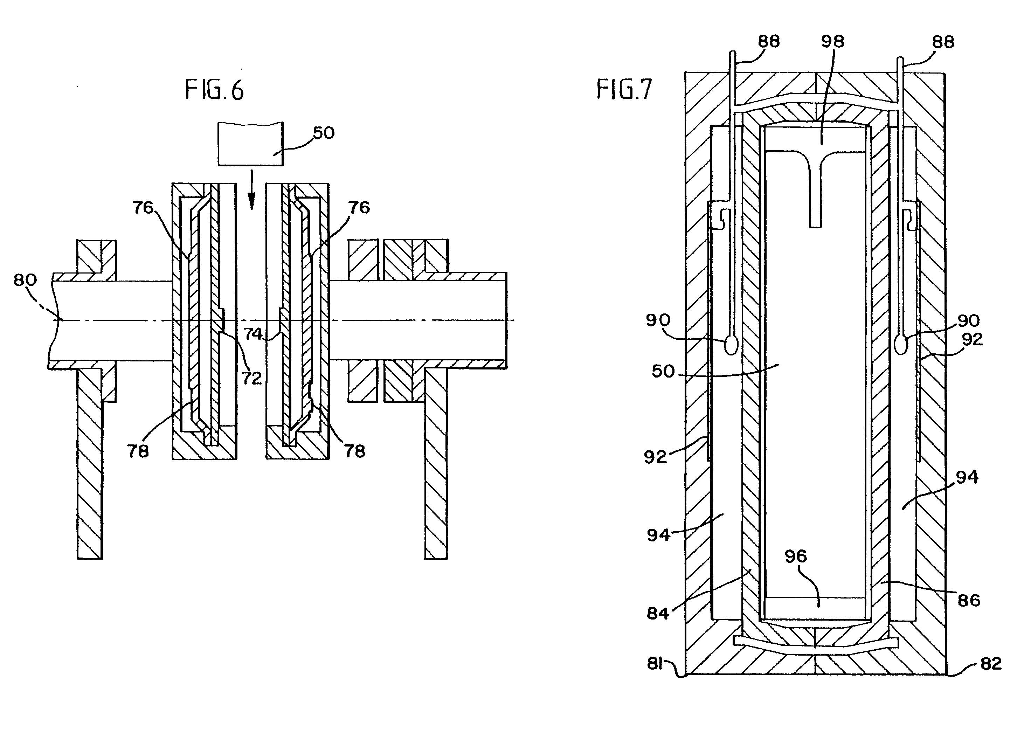

The cartridge 50 used to assay a blood sample for $HbA_{lc}$ is rotated and incubated, or heated, by a heating device as illustrated in FIG. 6. The cartridge 50 is positioned between a front heater plate 72 and a rear heater plate 74. Both the front heater plate 72 and the rear heater plate 74 are electrically heated by foil heater 76 and the temperature of heater plate 72 and heater plate 74 is measured by a resistance temperature device 78. A drive shaft 80 rotates the cartridge 50 to mix and transport the reaction mixtures from one reaction zone to another to conduct the $HbA_{lc}$ assay, while the front heater plate 72 and the rear heater plate 74 incubate the cartridge 50 at a the desired temperature. In accordance with the prior art, the front heater plate 72 and the rear heater plate 74 are aluminum plates and the temperature is maintained at the desired temperature with a proportional tempera ture controller.

As will be demonstrated more fully hereinafter, the prior art heating devices, like the heating device illustrated in FIG. 6, comprise an electrically-heated metal plate with a resist ance temperature device to measure the temperature and a proportional temperature controller to control the temperature. Such devices controlled the fluctuation of the temperature of the heating plates to within about 0.5C° between the cyclic temperature maxima and temperature minima achieved during the assay. The temperature fluctuation occurs in response to the heating and the cooling of the metal plate. An identical prior art heat ing device utilizing an on-off temperature con troller demonstrated about a 2C° temperature fluctuation between the temperature maximum and temperature minimum. It has been found that a fluctuation of heating plate temperature of about 0.5C° does not materially affect the reliability of an assay measuring the rate of interaction between two interactants. However, a large cyclic temperature variation of the heating plate, such as about 2C°, can adversely affect an assay that measures an interaction rate because the tempera ture directly affects the interaction rate and is not being held essentially constant. However, proportional temperature controllers used to maintain temperature fluctuations within about 0.5C° are expensive and are difficult to use and adjust. Therefore, it would be advantageous to have a method and device that performs an assay at an elevated temperature; that provides the essentially constant steady-state temperature of a proportional temperature controller; and that provides the economy and ease of use of an on-off temperature controller.

Accordingly, the heating device of the present invention provides an accurate rate-based assay because the temperature of the heating device fluctuates less than about 1C°, and usually less than about 0.5C°, between the cyclic tempera ture maxima and temperature minima, and, surpris ingly, this precise temperature control is achieved by an on-off temperature controller. Consequently, the essentially constant steady-state temperature provides a more accurate and reliable assay because the temperature of the assay is more effectively eliminated as a vari able. In addition, the assay is easy and economical to perform. Surprisingly and unex pectedly, the heating device of the present inven tion provides a precise steady-state temperature by using a simple and economical on-off tempera ture controller as opposed to the more sophisti cated and expensive proportional temperature controller utilized in the prior art.

A more precise control over an elevated steady-state temperature is provided by a heating device of the present invention as illustrated in FIGS. 2 through 4. Heater device 4.0 illus trated in FIG. 2 includes a thermally-conductive chamber 42, such as a metal chamber, like an aluminum chamber, that is heated by a resistance heater (not shown) and includes a resistance temperature device 44, like platinum, to measure the temperature of the surface of the thermally-conductive chamber 42. In accordance with an important feature of the present invention, cavity 46 of the thermally-conductive chamber 42 includes a material capable of undergoing a phase change at, or near, a predetermined temperature. FIG. 3 is a side view of heater device 40 taken in the direction of arrows 3-3 of FIG. 2 to more clearly show the cavity 46 of the thermally-conductive chamber 42. Similarly, FIG. 4 is a front view of heater device 40 taken in the direc tion of arrows 4-4 of FIG. 2 also more clearly showing the cavity 46 of the thermally-conductive chamber.

In accordance with an important feature of the present invention, FIG. 7 illustrates a cartridge 50 used in the HbA$_{1c}$ immunoassay posi tioned in a heating device of the present inven tion. The liquid HbA$_{1c}$ sample is heated by plac ing the plastic disposable cartridge 50 in contact with an electrically-heated aluminum chamber. The aluminum chamber is packed with a phase change compound, eicosane, that melts at 36.8°C. As will be demonstrated more fully hereinafter, the temperature of the surface of the thermally-conductive chamber and the temperature of the phase change compound temperature remain constant during the phase change, thereby permitting a precise temperature control by using an inexpen sive on-off temperature controller rather than a more costly proportional temperature controller. In particular, the cartridge 50 is positioned between a front heater 81 and a rear heater 82. The cartridge 50 contacts a thermally-conductive plate 84 of the front heater 81 and a thermally-conductive plate 86 of the rear heater 82. The thermally-conductive plate 84 and the thermally-conductive plate 86 preferably are metal plates, and to achieve the full advantage of the present invention are aluminum plates. The front heater 81 and the rear heater 82 each include a heater and thermostat lead 88, a thermostat 90 to measure temperature, and a foil heater 92.

The thermostat 90 is positioned in cavity 94. The cavity 94 includes a material the undergoes a phase change at, or near, the desired temperature. For the HbA$_{1c}$ assay, the cavity 94 of front heater 81 and of back heater 82 includes the compound eicosane, having a melt ing point of 36.8°C. Surprisingly and unexpected ly, the heating device of the present invention, as exemplified in FIG. 7, provided an essentially constant steady-state temperature that fluctuated less than about 0.5C° when employing an economical and easy-to-use on-off temperature controller. Previously, such a precisely controlled steady-state temperature was achieved only by using a proportional temperature controller.

It should be understood that the heating device of the present invention, such as the embodiment illustrated in FIG. 7, can be a heating device that permanently holds a phase change material in the thermally-conductive chamber or can be a heating device that allows a first phase change material to be removed from the thermally-conductive chamber and replaced with a second phase change material that melts at a different temperature from the first phase change material. For example, if the heating device is used only in HbA$_{1c}$ assays, the thermally-conductive chamber can be filled to an appropriate level with eico sane and then permanently sealed. However, if the heating device is to be used for several different assays, the conductive chamber also can include a removable face plate, or a plug, such that the phase change material can be removed and replaced with a different phase change materi al.

In accordance with an important feature of the present invention, the material comprising the thermally-conductive chamber can be any ma terial capable of conducting heat. Preferably, the thermally-conductive chamber is constructed of a material that can be heated relatively rapid ly. Exemplary materials include a metal, a metal alloy or a polymer capable of conducting heat. To achieve the full advantage of the present invention, the material comprising the thermally-conductive chamber is a metal or a metal alloy. Preferably, the metal or metal alloy comprising the thermally-conductive chamber has a thermal conductivity of at least about 0.15 cal/sec-cm. °C. Accordingly, materials that are useful as the thermally-conductive chamber include, but are not limited to, aluminum, aluminum alloys, beryllium, beryllium copper, copper, bronze, brass, gold, iron, magnesium, molybdenum, nickel, silver, tin or zinc. To achieve the full advan tage of the present invention, the material com prising the thermally-conductive chamber is alumi num or an aluminum alloy. In addition, thermally-conductive polymers, or polymers doped with metal, can be used as the material comprising the ther mally-conductive chamber as long as the polymer, or doped polymer, has a sufficient thermal conduc tivity and is sufficiently stable at the desired steady-state temperature such that the polymer does not melt, soften, deform or otherwise inter act with the phase change material.

In accordance with another important feature of the present invention, the phase change material included in the thermally-conductive chamber is a material that melts at or near the desired temperature for the assay. The particular identity of the phase change material included in the thermally-conductive chamber is not espe cially limited as long as the phase change ma terial is nonreactive, both in the solid and molten state, with the thermally-conductive cham ber; is stable; and does not degrade upon numerous and repeated phase changes. In addition, it is preferred that the phase change material is a relatively nontoxic material and is a relatively pure material, as opposed to a mixture of materi als or a material containing numerous impurities. Relatively pure materials undergo a more distinct phase change over a narrower temperature range or at a particular temperature, thereby providing a more precise control of the temperature of the heating device at, or near, the melting point of the phase change material. However, mixtures of materials or relatively impure materials can be used as the phase change material as long as the phase change material undergoes a phase change over a relatively narrow temperature range such as less than about 1C°. To achieve the full advantage of the present invention, the phase change material undergoes a phase change over a narrow temperature range, such as less than about 0.2C°.

It also should be understood that the selection of a particular phase change material will depend to a degree upon the material compris ing the thermally-conductive chamber. If the thermally-conductive chamber is constructed from a material having a high thermal conductivity, like a metal, then a phase change material can be selected that melts at, or very near to, the desired assay temperature because of the efficient heat transfer provided by the metal chamber. However, if the thermally-conductive chamber is constructed from a material having a low thermal conductivity, like a thermally-conductive polymer, then a phase change material having a melting point somewhat higher than the desired assay temperature is selected because of the relatively inefficient heat transfer provided by the polymeric chamber.

The phase change material useful in the method and device of the present invention can be selected from a variety of classes of compounds, including, but not limited to, ali phatic hydrocarbons; fatty alcohols; polyethylene oxides or polypropylene oxides; synthetic poly mers like polyethylene wax; metallic soaps, like an aluminum or a magnesium salt of a fatty acid; solid, waxy esters or amides; and combinations thereof. Each of the above exemplary classes of compounds includes solid materials that resist degradation; are stable over several phase changes; and, if relatively pure, demonstrate a sharp melting point.

For example, aliphatic hydrocarbons having a melting point above an ambient tempera ture of about 78°F, or 26°C, include at least about eighteen carbon atoms. Accordingly, the greater the number of carbon atoms present in the aliphatic hydrocarbon, the higher the melting point. In selecting a particular aliphatic hydro carbon, the optimum steady-state temperature first is determined, then an aliphatic hydrocarbon having an identical or almost identical, melting point as the predetermined temperature is selected as the phase change material if a metal chamber is used. Accordingly, if a polymeric chamber is used, then an aliphatic hydrocarbon having a melting point above the optimum steady-state temperature is selected. Therefore, the following straight chain aliphatic hydrocarbons are pre sented as nonlimiting examples of a phase change material that can be included in the thermally-conductive chamber of the heating device of the present invention.

| | |
|---|---|
| n-octadecane ($C_{18}$) | m.p. 28°C (82.4°F) |
| n-nonadecane ($C_{19}$)) | m.p. 32°C (89.6°F) |
| n-eicosane ($C_{20}$) | m.p. 36.8°C (98.2°F) |
| n-heneicosane ($C_{21}$) | m.p. 40.4°C (104.7°F) |
| n-docosane ($C_{22}$) | m.p. 44°C (123.6°F) |
| n-tricosane ($C_{23}$) | m.p. 47°C (116.6°F) |
| n-tetracosane ($C_{24}$) | m.p. 50.9°C (123.6°F) |

| | |
|---|---|
| n-pentacosane ($C_{25}$) | m.p. 53.3°C (127.9°F) |
| n-hexacosane ($C_{26}$) | m.p. 56.4°C (133.5°F) |
| n-heptacosane ($C_{27}$) | m.p. 59°C (138.2°F) |
| n-octacosane ($C_{28}$) | m.p. 61.4°C (142.5°F) |
| n-tricontane ($C_{30}$) | m.p. 64.7°C (148.5°F) |
| n-hentriacontane ($C_{31}$) | m.p. 67.9°C (154.2°F) |
| n-dotriacontane ($C_{32}$) | m.p. 69.7°C (157.5°F) |
| n-hexatriacontane ($C_{36}$) | m.p. 76.2°C (169.2°F) |
| n-tetracontane ($C_{40}$) | m.p. 81.3°C (178.3°F) |
| n-tetratetracontane ($C_{44}$) | m.p. 86.4°C (187.5°F), |

In addition, branched aliphatic hydro carbons, like 2-methylhexadecane or 2-methylpenta decane, or unsaturated aliphatic hydrocarbons, like 2-methylpentadecene and n-octadecadiene also can be used as the phase change material. However, the unsaturated aliphatic hydrocarbons are susceptible to oxidation, and therefore cer tain unsaturated aliphatic hydrocarbons may not be sufficiently stable to repeated phase changes.

From the preceding examples, it is evident that a variety of aliphatic hydrocarbons can be used as the phase change material in a heating device of the present invention. The aliphatic hydrocarbons are the preferred phase change material because of the availability of compounds having different melting points, the low toxicity of the aliphatic hydrocarbons, the purity of the compounds and the stability of the compounds. However, although the aliphatic hydro carbons provide a wide range of available melting points, a specific aliphatic hydrocarbon may not be available to achieve and maintain a particular steady-state temperature of interest. Therefore, other classes of compounds also have been found useful in the heating device of the present inven tion. Such other classes of compounds include, but are not limited to, fatty alcohols, such as l-dodecanol (m.p. 26°C), cetyl alcohol (m.p. 49.3°C), l-octadecanol (m.p. 58.5°C) and l-eicosanol (m.p. 72.5°C); metallic soaps, like aluminum stearate or zinc stearate; natural and synthetic polymers and waxes having distinct melting points; and other stable, nontoxic, and relatively nonreactive compounds having distinct melting points, such as p-bromotoluene, p-tolui dine, o-tetrachloroxylene, p-tetrachloroxylene, o-xylenedibromide, o-xylenedichloride, m-xylene dichloride, camphene, naphthalene, methyl cinna mate, l-menthol, tristearin, azoxybenezene and benzophenone.

To demonstrate the new and improved results achieved by using the heating device of the present invention, a heating device including an aluminum chamber containing the aliphatic hydrocarbon eicosane was compared to a heating device including a solid aluminum plate for their respective ability to achieve and maintain a steady-state temperature of 37°C, the optimum temperature for performing the turbidimetric assay for $HbA_{lc}$. In the following experiments, the temperature of the surface of the heating device and the temperature of the air five inches from the surface of the heating device were deter mined under conditions of 74% relative humidity and a pressure of 29.37 inches Hg. The tempera ture of the air five inches from the surface of the heating device was measured to determine the amount of heat lost to the surrounding air.

To more fully understand the data pre sented hereinafter, it should be understood that heating devices can employ one of two types of temperature controllers, either an on-off tempera ture controller or a proportional temperature controller. An on-off temperature controller supplies full power to the heating device whenever the measured temperature falls below a preset range. Conversely, an on-off temperature control ler completely suppresses the power to the heating device whenever the measured temperature rises above a preset range.

In contrast, a proportional temperature controller attempts to regulate power input to achieve a more precise temperature control. With a proportional temperature controller, a preset, proportional band exists wherein full power is applied if the temperature falls below a preset range; no power is applied if the temperature rises above a preset range; and a proportional amount of power is applied when the temperature is within the preset proportional band. Differ ent types of proportional temperature controllers are available. For a proportional control (P), the temperature control response is proportional to the deviation from a set point within the proportional band. If a derivation control (D) is utilized, a faster temperature correction is achieved because the temperature controller is based upon the rate of temperature change from a set temperature. If a reset or integral control (I) is utilized, the control corrects the tempera ture by changing the proportional controller in response to a time deviation from the set tempera ture. The most sensitive and complex proportional temperature controller is a PID temperature con troller that uses an algorithm that combines the proportional (P), integral (I), and derivative (D) controls, thereby providing a more responsive temperature control. Commercially-available proportional temperature controllers are substan tially more expensive than on-off temperature controllers, and are substantially more precise than on-off temperature controllers. However, on-off temperature controllers require no adjust ment prior to use, whereas proportional tempera ture controllers require substantial calibration and adjustment, often requiring up to about one hour of time, to achieve and maintain the desired temperature.

In accordance with an important feature of the present invention, it has been demonstrated that when a phase change material is in contact with a thermally-conductive material, excess power, or energy, that usually increases the temperature of the thermally-conductive material is absorbed by the phase change material and causes the phase change material to melt rather than increase the heater temperature of the ther mally-conductive material. When the excess heater power is regulated, or dissipated, by this phase change method, a more economical on-off tempera ture controller can be used to achieve essentially the same temperature control precision as a pro portional temperature controller at or near the temperature that the phase change material melts, or freezes. As fully demonstrated below, experi ments show that a heater device using a PID pro portional temperature controller in an on-off mode, i.e., essentially using an on-off tempera ture controller, and an eicosane-filled aluminum chamber maintained the temperature of the heater surface at between about $36.15°$ C and about $36.5°$ C, for a temperature fluctuation of about $0.35C°$. In contrast, a heating device utilizing the PID proportional temperature controller in an off-on mode and an aluminum plate, without eicosane, was maintained at a temperature between about $35.8°$ C and about $37.5°$ C, for a temperature fluc tuation of about $1.7C°$. Consequently, the overall result is a new and improved heating device that maintains as precise a temperature control as a prior art PID-controlled aluminum plate, but that utilizes a more economical and significantly easier-to-use on-off temperature controller.

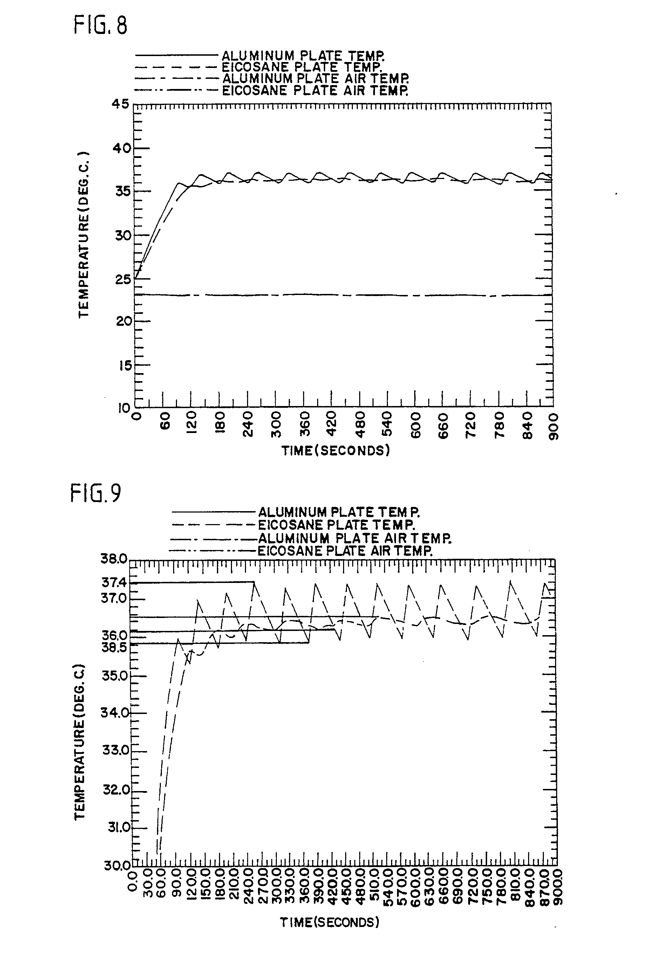

For example, the graph of FIG. 8 com pares the initial heating of a prior art aluminum plate heating device with the initial heating of a heating device of the present invention compris ing eicosane in an aluminum chamber. The initial heating ranged from a time of 0 seconds to a time of 900 seconds and a PID temperature control ler in an on-off mode was used to control the temperature. The temperature was measured both at the surface of the heating device by thermo couples attached directly to the heating device and at a distance from the surface of the heating device by thermocouples positioned five inches from the top of each heating device. The graph of FIG. 8 demonstrates that the temperature five inches from each heater remains at a constant ambient temperature of about $23°$ C. Accordingly, each heater dissipates the same amount of heat to the surrounding air. FIG. 8 also shows that the heating device of the present invention in cluding the eicosane-containing aluminum chamber attained the desired steady-state temperature slightly more slowly than the prior art aluminum plate heating device attained the desired steady-state temperature (120 sec. vs. 100 sec.). Such a result is not unexpected because eicosane has a larger heat capacity than aluminum. However, and in accordance with an important feature of the present invention, the heating device of the present invention demonstrated a much smaller fluctuation between the temperature maximum and temperature minimum detected on the surface of the heating device. Therefore, the heating device including the eicosane-containing aluminum chamber provided a more constant steady-state temperature from the time the steady-state temperature was attained until the test was terminated after 900 seconds.

The improved control over the steady-state temperature provided by the heating device of the present invention is more fully demonstrat ed in the graph of FIG. 9 that presents the data of FIG. 8 in an expanded form. From FIG. 9, it is seen that the highest steady-state temperature attained by the prior art aluminum plate heating device ($T_{HSSA}$) was 37.4° C, and the lowest steady-state temperature demonstrated by the prior art heating device ($T_{LSSA}$) was 35.8° C. Therefore, the prior art heating device, with the temperature controlled by a PID proportional temperature controller run in the on-off mode, demonstrated a temperature fluctuation ($T_{HSSA}$-$T_{LSSA}$, or 37.4° C-35.8° C) of 1.6C°. In contrast, the highest steady-state temperature attained by the heating device of the present invention ($T_{HSSE}$) was 36.5° C, and the lowest steady-state temperature ($T_{LSSE}$) demonstrated was 36.15° C. Therefore, the heating device including the eicosane-contain ing aluminum chamber, with the temperature con trolled by a PID proportional tempera ture control ler run in the on-off mode, demonstrated a tem perature fluctuation ($T_{HSSE}$-$T_{LSSE}$, or 36.5° C-36.15° C) of 0.35C°. Accordingly, the heating device of the present invention demonstrated an approxi mately 357% improvement in maintaining the surface of the heating device at a desired steady-state temperature. Therefore, a heating device of the present invention, controlled with an on-off controller, demonstrates essentially the same precision in maintaining a predetermined steady-state temperature as a prior art aluminum plate heating device controlled with a PID propor tional temperature controller run in the propor tional mode.

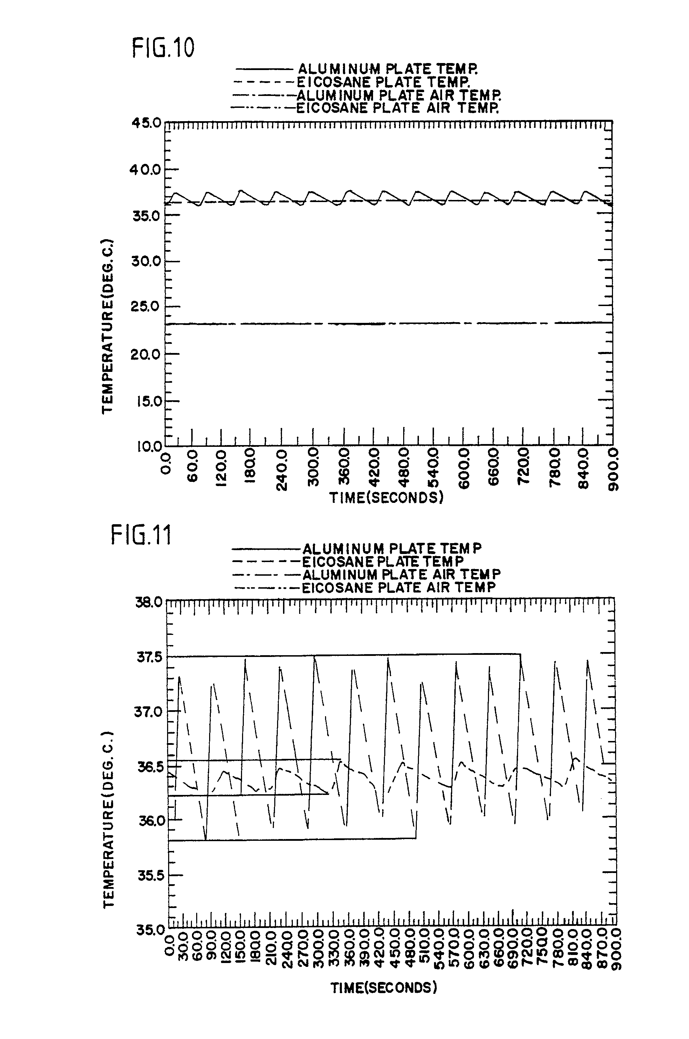

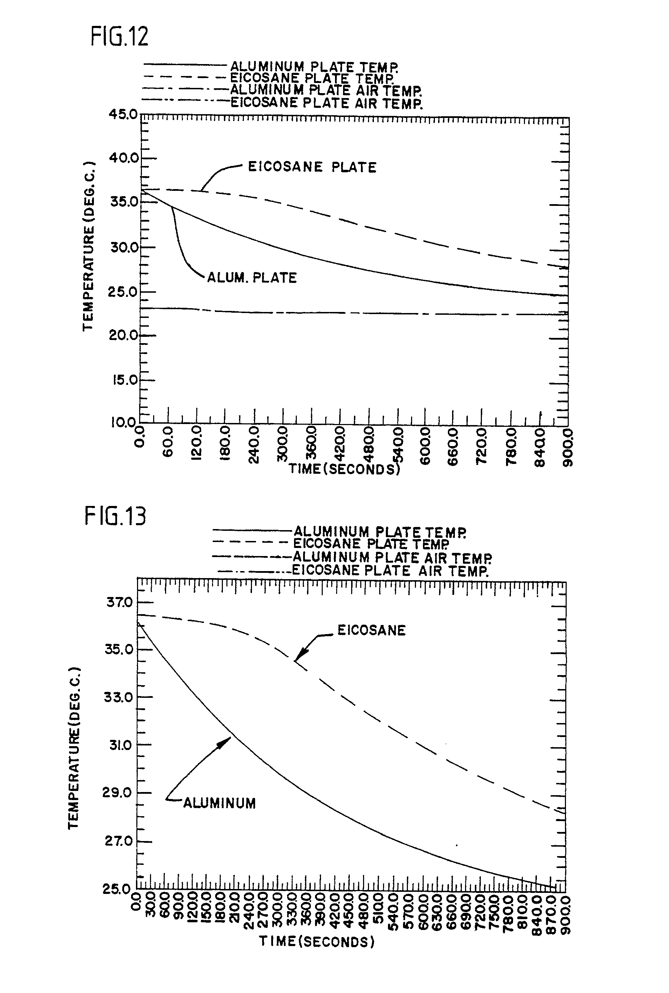

Similarly, the graph of FIG. 10 shows a comparison test between the prior art aluminum plate heating device and the eicosane-containing heating device of the present invention for their respective abilities to maintain a constant pre determined steady-state temperature over a rela tively long time period. The test was conducted under the same conditions as initial heating test illustrated in FIG. 8, and like FIG. 8, the air temperature five inches from the heating device remained constant at ambient temperature. The graph of FIG. 10, and the expanded graph of FIG. 11, show that when using an on-off tempera ture controller, the heating device of the present invention more precisely controls the desired steady-state temperature at an essentially con stant value than the prior art aluminum plate heating device. Therefore, temperature can be effectively eliminated as a variable in an assay that follows the rate of a reaction by using a less costly and more easy-to-use on-off tempera ture controller.

In particular, the expanded graph of FIG. 11 shows that after an initial heating period, wherein the heating device attains the desired steady-state temperature, the heating device of the present invention surprisingly and unexpectedly maintains an essentially constant steady-state temperature. After attaining the desired steady-state temperature, the aluminum plate heating device of the prior art attained a highest steady-state temperature ($T_{HSSA}$) of 37.5° C and a lowest steady state temperature ($T_{LSSA}$) of 35.8° C. Therefore, the prior art heating device, comprising an electrically-heated aluminum plate, demonstrated a temperature fluctuation of 1.7C° ($T_{HSSA}$-$T_{LSSA}$). In contrast, the heating device of the present invention, comprising an electric ally-heated aluminum chamber including eicosane, demonstrated a temperature fluctuation of only 0.33C°. ($T_{HSSE}$ = 36.55° C, $T_{LSSE}$ = 36.22° C, $\Delta T$ = $T_{HSSE}$-$T_{LSSE}$ = 0.33C°). Accord ingly, the heating device of the present invention demonstrated an approximately 415% improvement in an ability to maintain an essentially constant steady-state temperature over a relatively long time period of approximately 15 minutes (900 seconds).

In addition, FIGS. 12 and 13 show graphs comparing a prior art aluminum plate heating device to a heating device of the present inven tion during the cool-down period. Similar to FIGS. 8 and 10, the temperature five inches from the heating device remains constant at ambient temperature thereby showing that the two heating devices dissipate the same amount of heat to the surrounding air. Furthermore, both the graph of FIG. 12 and the expanded graph of FIG. 13 show that the heating device of the present invention cools down more slowly than the prior art heating device.

The above experiments demonstrate that a heating device comprising a thermally-conductive chamber that contains phase change material ex hibited a more precise control over the tempera ture of the heater surface than a heating device comprising a solid aluminum plate ($\Delta T$ for the heating device of the present invention is about 0.35C°, whereas $\Delta T$ for the prior art solid alumi num plate is about 1.7C°). The heating device including the eicosane required a longer time attain the desired steady-state temperature and a longer time to cool to ambient temperature because of the greater thermal mass of the heater plate of the present invention. Such a result is expected and the increased heat up and cool down period is insufficient to adversely affect assays utilizing a heating device of the present invention. Therefore, in general, the temperature precision achieved using a heating device compris ing a thermally-conductive chamber including a phase change material, and an on-off temperature controller equals the precision found using a solid aluminum plate heating device controlled with a proportional temperature controller. Ac cordingly, the

EP 0 431 398 A2

heating device of the present invention has the advantage that adjustment of the temperature controller, often taking almost an hour to adjust and calibrate, is not required.

In addition, the heating device is a relatively small device that can be heated to the desired steady-state temperature within about two minutes. Therefore, the heating device is ideally suited for medical offices and small laboratories that require heating devices to maintain an essentially constant temperature over relatively long time periods. The small heating device is easily stored and quickly heats to the desired steady-state temperature thereby eliminating bulky water baths or ovens that re quire relatively long times to achieve a steady-state temperature. For example, a heating device of the present invention can include an eicosane-containing thermally-conductive chamber that is from about 1.5 inches to about 2 inches in length and about 1.5 inches to about 2 inches in width. Such small dimensions make the heating device of the present invention ideal for heating the dis posable cartridges used in the $HbA_{lc}$ assay to a steady-state temperature of about 37° C.

In accordance with another important feature of the present invention, the heating device provides a uniform temperature across the surface of the heating plate. A uniform tempera ture is important because in an assay, such as the $HbA_{lc}$ assay of blood, the entire assay device ideally is subjected to the same temperature, and therefore temperature is more effectively eliminated as a variable in rate-determining assay. It has been found that an electrical heater, such as the foil heater 92 illustrated in FIG. 7, uniformly heats the eicosane in the cavity 94, that in turn uniformly heats the ther mally-conductive heater plates 84 and 86. Accord ingly, because the temperature across the entire surface of both thermally-conductive heater plate 84 and thermally-conductive heater plate 86 is uniform, an optical window 96, wherein-the tur bidometric assay is viewed and monitored, is subjected to the identical temperature as the reaction zone 98, wherein the test sample is mixed with, and interacts with, assay reagents at the various stages of the assay.

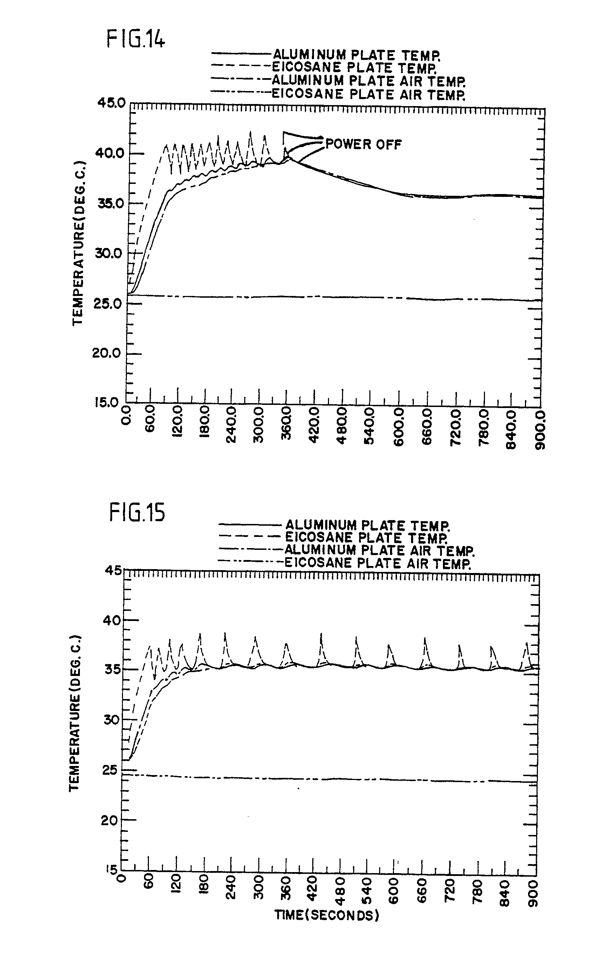

It also has been found that the tempera ture across the heating surfaces of the heating device is more uniform if the phase change materi al, like eicosane, is sufficiently heated first to melt the phase change material, then, after terminating power to the heating device, allowing the eicosane to cool. Additional power as needed then is supplied by an on-off temperature con troller to maintain the temperature at the desired steady-state temperature. In an experiment where in thermocouples were positioned at the upper right-hand corner, the middle, and the lower left-hand corner of the rear of a heater surface of a heating device of the present invention, it was observed that, while the power was supplied to the heating device, a temperature gradient existed across the rear heater surface. It was found that the upper right-hand corner of the heater surface (i.e. the portion of the rear surface nearest to the resistance heater) demon strated a higher temperature than the middle and the lower left-hand corner of the heater surface (i.e. each position respectively farther from the resistance heater). However upon shutting the power supply after the eicosane melted, the temperature gradient disappeared and the tempera ture was uniform across the entire rear surface of the heating plate. These results are illus trated in the graph of FIG. 14, wherein the power to the heating device was shut off after approxi mately 360 seconds. The melted eicosane then quickly cooled to its freezing point, and main tained the surface of heating device at the freez ing point of eicosane for a relatively long time period.

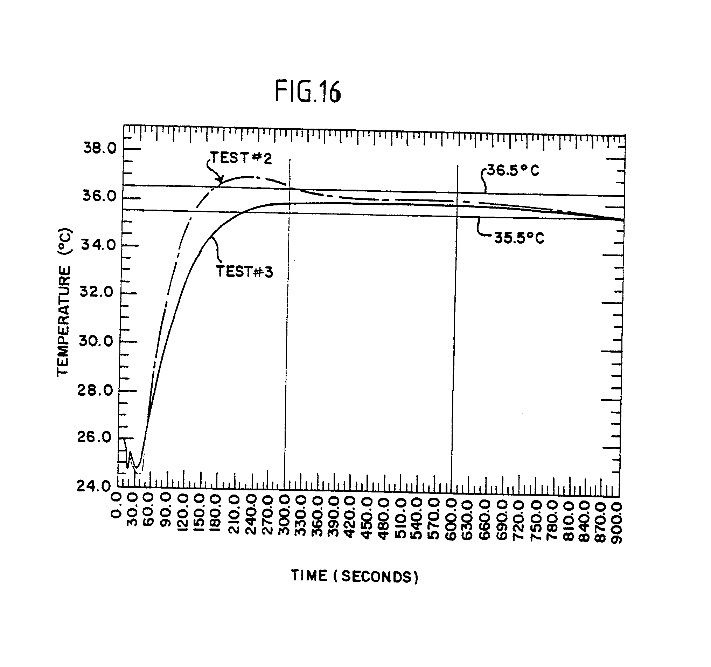

The results graphed in FIG. 14 can be compared to the results graphed in FIG. 15. The data utilized in the graph of FIG. 15 was obtained in an identical manner to the data utilized in the graph of FIG. 14 except that a proportional temperature controller was used to maintain the steady-state temperature. The spikes in the graph of FIG. 15 show that the heating surface of the heating device has a continual temperature gradient as the proportional temperature control ler periodically supplies more power to the heat ing device. When power is supplied to the heating device, the area of the heater surface closest to the resistance heater, i.e., the upper right-hand corner, periodically demonstrated a higher temperature than the other areas of the heater surface more distant from the resistance heater. In similar experiments to those used to generate the graphs of FIG. 14 and FIG. 15, it was found that the temperature gradients observed on the front surface of the heater plate were not as great as the temperature gradients observed on the back surface of the heater plate. However, it was observed that for both the front surfaces and the rear surfaces of the heater plates, better temperature precision is achieved if power is supplied to the heater device sufficiently long to first melt the phase change material included in the thermally-conductive chamber.

It also was observed that the melted eicosane maintained a sample heated by the heating device at a steady-state temperature of about 36° C for about 10 minutes, without supplying any further power to the heating device. In these tests, a water sample was introduced into a plas tic cartridges used in an $HbA_{lc}$ assay, and the water temperature was determined. The results are illustrated in the graph of FIG. 16, wherein the power to the eicosane-containing heating device of the present invention was terminated after

14

approximately 300 seconds. Additional power was not subsequently supplied to the heating device. The water samples heated by the heating device were maintained at 36°C + 0.5C° for about 10 minutes while the eicosane in the aluminum chamber underwent a phase change from a liquid to a solid.

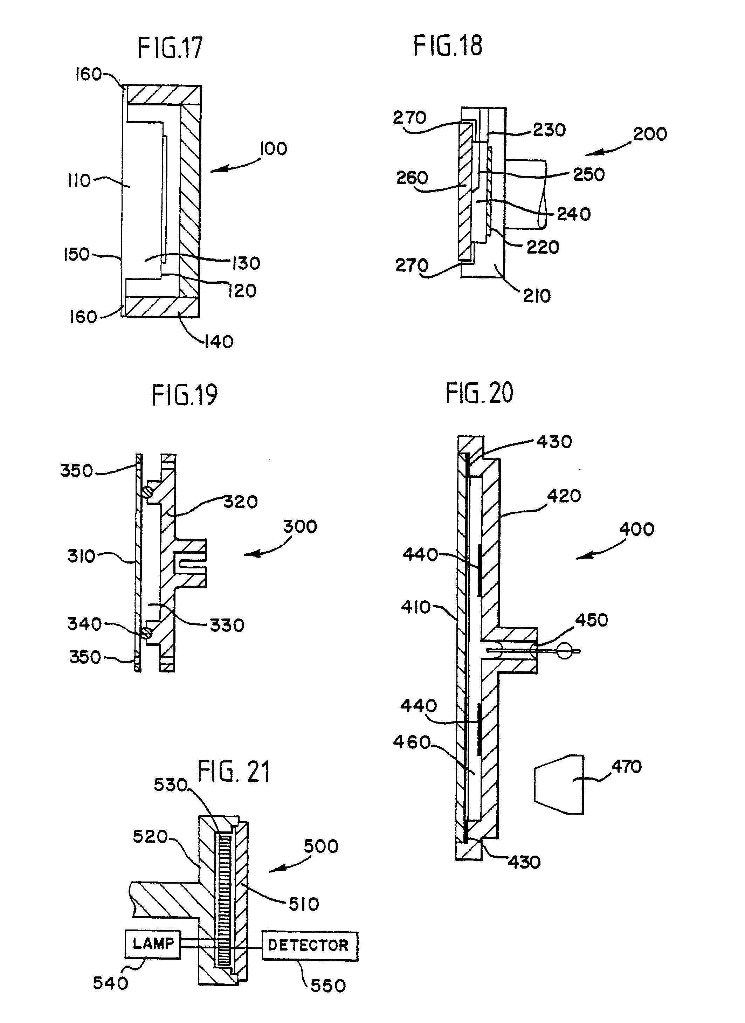

In addition, it was found that the phase change material, when heated above its melting point, could leak from the cavity of the thermally-conductive chamber. Accordingly, FIGS. 17 through 19 illustrate alternate embodiments of the heating device of the present invention. The devices illustrated in FIGS. 17 through 19 use different sealing means to eliminate the problem of a melted phase change material from leaking from the thermally-conductive chamber.

For example, FIG. 17 shows a heating device 100 including a heater and a temperature sensor 110 positioned on the inside surface of an aluminum container 120. Cavity 130 of the aluminum container 120 is filled with a phase change material, such as eicosane. Preferably, the phase change material is premolded in the solid state, such as into a block, that can be placed into the cavity 130. The aluminum con tainer 120, including the phase change material, is placed in a housing 140, such as a plastic housing, then a thermally-conductive face plate 150, such as an aluminum plate, is positioned over the aluminum container 120 and the housing 140. The thermally-conductive face plate 150 is secured to the aluminum container 120 and the housing 140 by a layer of sealant 160. Preferably the sealant 160 is a material that cures, or sets, at approximately ambient temperature, or at least sufficiently below the melting point of the phase change material such that the sealant cures while the phase change material is in the solid state. Accordingly, the sealant 160, im pervious to the phase change material, retains the phase change material within the heating device 100.

FIG. 18 illustrates another embodiment of the heating device of the present invention wherein heating device 200 comprises a container 210, such as a plastic container, like a polycar bonate or a polysulfone, having positioned therein a heater 220 and a heater lead 230. Cavity 240 of the container 210 includes a phase change material and a temperature sensing element 250. A thermally-conductive face plate 260 is secured to the container 210 by a sealant 270 to prevent liquified phase change material from leaking from the heating device 200. A silicone sealant can be used as the sealant 270 because a silicone sealant is impervious to the melted phase change material; can be cured at ambient temperature; and is sufficiently flexible to accommodate the different thermal expansion of the container 210 and the thermally-conductive face plate 260. A suitable silicone sealant is RTV 106, available from General Electric Co., Waterford, NY.

FIG. 19 illustrates yet another embodi ment of a heating device of the present invention that eliminates a sealant. A heating device 300 includes a thermally-conductive face plate 310 that is secured to a container 320, such as a plastic container, including a phase change ma terial in cavity 330 by means of a gasket 340, such as an "O"-ring. The face plate 310 then is secured to the container 320 by clamps 350. Such an embodiment has the definite advantage that the heating device 300 can be assembled and dis assembled easily. Accordingly, the phase change material in heating device 300 easily can be changed to allow a different steady-state tempera ture to be precisely controlled.

The embodiments depicted in FIG. 20 and FIG. 21 illustrate heating devices of the present invention utilizing optical temperature sensing elements and alternative heaters. The particular advantage to optical temperature sens ing elements is that electrical leadwires used in thermistors and resistance temperature devices can be eliminated. Accordingly, a heating device, such as the heating device used in the HbA$_{Ic}$assay of whole blood, is more easily rotated because the electrical connections are eliminated. FIG. 20 illustrates a heating device 400 that includes a polished metal heating plate 410 se cured to a transparent housing 420, such as a transparent plastic housing, like a LEXAN housing, by a layer of a sealant 430. Heaters 440 are mounted inside the transparent housing 420 and are joined to electrical leads 450. The electri cal leads 450 should be sufficiently flexible such that, when the heating device 400 is rotated, the electrical leads 450 can flex and will not break. Cavity 460 contains a phase change materi al, like eicosane. The temperature is detected by an optical sensor 470.

Generally, the phase change material, like eicosane, is an opaque solid and a clear liquid. In the solid phase, incident light from the optical sensor 470 directed at the phase change material is scattered. Therefore, the photocurrent returning to the optical sensor 470 is low. However, after the phase change material melts, incident light is transmitted through the transparent housing 420 and through the transpar ent, melted phase change material to strike the polished metal heating plate 410. The incident light is reflected from the polished metal heating plate 410 and is detected by the optical sensor 470 and thereby signaling that power to the heater 440 should be terminated. Accordingly, a differ ent steady-state temperature can be maintained by incorporating a different phase change material in the cavity 460 of the heating device 400.

FIG. 21 illustrates another embodiment of the heating device of the present invention, wherein the polished metal heating plate 410 of FIG. 20 is replaced by a transparent heating plate 510 of heating device

15

500 in FIG. 21. The heating device 500 also includes a transparent housing 520 and a cavity 530 including a phase change material. In contrast to the reflective optical sensor 470 shown in FIG. 20, the heating device 500 of FIG. 21 includes a lamp 540 and a light transmission detector 550. When the opaque, solid phase change material melts to produce a clear, liquid phase change material, the transmis sion of light from lamp 540 to detector 550 sig nals that the heater should be terminated.

It should be understood that the materi al of construction of the transparent housing 520, such as a thermoplastic material, like poly styrene, a polycarbonate or an acrylic, has a lower thermal conductivity than a housing con structed of metal. Accordingly, it is necessary to include a phase change material into the cavity 530 of heating device 500 that melts at a higher temperature than the desired steady-state tempera ture. It is well within the experimental tech niques known to one of ordinary skill in the art to select a phase change material having a suffi ciently high melting point in order to provide the desired steady-state temperature on the sur face of the transparent heating plate 510 by considering such variables as the identity and the thickness of the material comprising the transparent housing 520; the identity and the thickness of the material comprising the trans parent heating plate 570; and the amount of phase change material included in the cavity 530.

To achieve the full advantage of the present invention, all electrical leads to the heating device are eliminated. Such a heating device is easily rotated and therefore is especi ally useful in the previously-described $HbA_{Ic}$ assay of whole blood. A heating device that eliminates the electrical leads to the heaters and the temperature sensing elements is substan tially similar to the heating devices illustrated in FIG. 20 and FIG. 21, however the heater plates and the electrical leads to the heater plates are eliminated. The phase change material in the cavity of the housing is heated by means of an infrared lamp, or by induction until the phase change material is melted. The heat source then is shut off, and the latent heat stored in the melted phase change compound maintains the heater plate at an essentially constant steady-state temperature that is determined by the material of construction of the heater plate, the thickness of the heater plate, the volume of the cavity, the amount of phase change material in the cavity, the melting point of the phase change material, the latent heat of the phase change material, and the rate of heat loss from the heater plate. It has been demonstrated, for example, in the graph illustrated in FIG. 16, that a melted phase change material can maintain an essentially con stant steady-state temperature for at least about 10 minutes after the power to the heating device has been terminated.

A heating device that eliminates all electrical leads is particularly useful in the $HbA_{Ic}$ assay of whole blood, wherein a cartridge including the blood sample and the necessary reagents is both heated and rotated during the assay. A heating device that does not include any electrical leads allows the cartridge to be maintained at an essentially constant steady-state temperature to obtain an accurate determi nation of the rate of interaction, and also can be easily rotated for the blood sample to contact and interact with the various assay reagents. The elimination of electrical leads to the heaters and/or the temperature sensing elements provides an easier to construct rotational heating device that is not subject to broken electrical leads when the heating device is rotated and the elec trical leads are flexed. In addition, rotating the heating device mixes the melted phase change material thereby preventing cold spots from de veloping in the heater device due to localized freezing of the melted phase change material. Accordingly, the heater plate maintains a uniform, steady-state temperature across the entire surface of the heater plate.

It is envisioned that a heating device of the present invention has a number of applica tions in diagnostic assays that are performed at elevated temperatures, in addition to the $HbA_{Ic}$ assay. The heating device of the present inven tion effectively maintains an essentially constant steady-state temperature for relatively long time periods, thereby eliminating the temperature of the assay as a variable in assays that measure the rate of interaction between interactants. The heating device of the present invention is simple to construct and is economical, providing the precise control of a steady-state temperature, such as a temperature fluctuation of less than about $0.5C^{\circ}$, by using an on-off temperature con troller. Surprisingly and unexpectedly, such a precise control over a steady-state temperature previously has been achieved only by using an expensive and difficult-to-calibrate proportion al temperature controller.

Obviously, many modifications and varia tions of the invention as hereinbefore set forth can be made without departing from the spirit and scope thereof, and therefore only such limi tations should be imposed as are indicated by the appended claims.

## Claims

1. A heating device capable of maintaining an essentially constant steady-state temperature com prising a heat conductive plate disposed in heat transfer communication with a reservoir adapted to receive a phase change material such that energy delivered to said phase change material to heat said material causes heat transfer from said phase change material to said heating plate, said phase change material capable of undergoing a phase change upon heating such that during the phase change of said material, additional energy delivered to the phase change material prior to completion of the phase change is absorbed by said phase change material for a phase change so that an essentially constant amount of heat is transferred to said heat conductive plate during phase change; means operatively connected to said heating device for sensing the temperature of said heat conductive plate; and means operatively connected to said heating device for heating said phase change material.

2. The heating device of claim 1 wherein the heating means for heating said phase change material supplies sufficient energy to the heating device in response to the temperature detected by the sensing means for sensing the temperature of the heat con   ductive plate.

3. The heating device of claim 1 wherein the heat conductive plate is selected from the group consisting of metal, a metal alloy, a thermally-conductive polymer, a polymer doped with a metal and a polymer doped with a metal alloy.

4. The heating device of claim 3 wherein the heat conductive plate is a metal or a metal alloy selected from the group consisting of aluminum, an aluminum alloy, beryllium, beryllium copper, copper, bronze, brass, gold, iron, magnesium, molybdenum, nickel, silver, tin and zinc.

5. The heating device of claim 1 wherein the phase change material undergoes a phase change over a range of less than 1C°.

6. The heating device of claim 1 wherein the phase change material is selected from the group consisting of an aliphatic hydrocarbon, a fatty alcohol, a polyethylene oxide, a polypropylene oxide, a synthetic polymer, a metallic soap, a waxy ester, a waxy amide and combinations thereof.

7. The heating device of claim 6 wherein the phase change material is an aliphatic hydrocarbon selected from the group consisting of n-octadecane, n-nonadecane, n-eicosane n-heneicosane, n-docosane, n-tricosane, n-tetracosane, n-pentacosane, n-hexacosane, n-heptacosane, n-octacosane, n-tricontane, n-hentriacontane, n-dotriacontane, n-hexatricontane, n-tetracontane, n-tetratetra contane, 2-methylhexadecane, 2-methylpentadecane, 2-methylpentadecane and n-octadecadiene.

8. A heating device capable of maintaining an essentially constant and predetermined steady-state temperature comprising a heat conductive plate disposed in heat transfer communication with a reservoir adapted to received a phase change material; a heating means operatively connected to the heating device for heating the reservoir such that energy delivered by the heating means to the reservoir heats the phase change material to cause heat transfer from the phase change material to the heat conductive plate; and a sensing means for sensing the temperature of the heat conductive plate operatively connected to the heating device, wherein the phase change material is capable of undergoing a phase change from a first phase to a second phase upon heating such that during the phase change of the phase change material, additional energy delivered to the phase change material prior to completion of the phase change from the first phase to the second phase is absorbed by the phase change material to effect the phase change in order to transfer an essentially constant amount of heat to the heat conductive plate during the phase change and such that after the phase change of substantially all of the phase change material, the sensing means senses a temperature above the predetermined steady-state temperature and the heating means then delivers substantially no additional energy to the phase change material until a portion of the phase change material undergoes a second phase change from the second phase to the first phase whereupon the sensing means senses a temperature below the steady-state temperature to activate the heating means.

9. A method of maintaining a test sample at an essentially constant steady-state temperature comprising introducing the test sample in a suitable container, then contacting the container with a heating device comprising a heat conductive plate disposed in heat transfer communication with a reservoir adapted to receive a phase change material such that energy delivered to said phase change material to heat said phase change material causes heat transfer from said phase change material to said heating plate, said phase change material capable of undergoing a phase change upon heating such that during the phase change of said phase change material, additional energy delivered to the phase change material prior to completion of the phase change is absorbed by said phase change material for the phase change so that an essentially constant amount of heat is transferred to said heating plate during the phase change; means operatively connected to said heating device for sensing the temperature of said heat conductive plate; and means operatively connected to said heating device for heating said phase change material.

10. A method of maintaining a biological sample at an essentially constant steady-state temperature during a rate-based assay for a component of the biological sample comprising introducing the biolog ical sample into a suitable assay container, then contacting the assay container with a heating device capable of maintaining an essentially constant steady-state temperature including a heat conductive plate disposed in heat transfer communication with a reservoir adapted to receive a phase change material such that energy delivered to said phase change material to heat said material causes heat transfer from said phase change material to said heating plate, said phase change material capable of under going a phase change upon heating such that during the phase change of said material, additional energy delivered to the phase change material prior to completion of the phase change is absorbed by said phase change material for a phase change so that an essentially constant amount of heat is transferred to said heating plate during phase change; means opera tively connected to said heating device for sensing the temperature of said heat conductive plate; and means operatively connected to said heating device for heating said phase change material.

FIG.1

FIG.2

FIG.3

FIG.4

FIG. 5a

FIG. 5b

FIG. 5c

FIG. 5d

FIG. 5e

FIG. 5f

FIG.5g

FIG.5h

FIG.5i

FIG.5j

FIG.5k

FIG.5l

FIG.7

FIG.6

## FIG. 8

Legend:
- ALUMINUM PLATE TEMP.
- EICOSANE PLATE TEMP.
- ALUMINUM PLATE AIR TEMP.
- EICOSANE PLATE AIR TEMP.

Y-axis: TEMPERATURE(DEG.C.)
X-axis: TIME(SECONDS)

## FIG. 9

Legend:
- ALUMINUM PLATE TEMP.
- EICOSANE PLATE TEMP.
- ALUMINUM PLATE AIR TEMP.
- EICOSANE PLATE AIR TEMP.

Y-axis: TEMPERATURE(DEG.C)
X-axis: TIME(SECONDS)

23

FIG.10

ALUMINUM PLATE TEMP.
EICOSANE PLATE TEMP.
ALUMINUM PLATE AIR TEMP.
EICOSANE PLATE AIR TEMP.

FIG.11

ALUMINUM PLATE TEMP
EICOSANE PLATE TEMP
ALUMINUM PLATE AIR TEMP
EICOSANE PLATE AIR TEMP

## FIG.12

Legend:
- ALUMINUM PLATE TEMP.
- EICOSANE PLATE TEMP.
- ALUMINUM PLATE AIR TEMP.
- EICOSANE PLATE AIR TEMP.

EICOSANE PLATE

ALUM. PLATE

Y-axis: TEMPERATURE (DEG.C.), 10.0 to 45.0
X-axis: TIME (SECONDS), 0.0 to 900.0

## FIG.13

Legend:
- ALUMINUM PLATE TEMP.
- EICOSANE PLATE TEMP.
- ALUMINUM PLATE AIR TEMP.
- EICOSANE PLATE AIR TEMP.

EICOSANE

ALUMINUM

Y-axis: TEMPERATURE (DEG.C.), 25.0 to 37.0
X-axis: TIME (SECONDS), 0.0 to 900.0

25

## FIG.14

ALUMINUM PLATE TEMP.
EICOSANE PLATE TEMP.
ALUMINUM PLATE AIR TEMP.
EICOSANE PLATE AIR TEMP.

## FIG.15

ALUMINUM PLATE TEMP.
EICOSANE PLATE TEMP.
ALUMINUM PLATE AIR TEMP.
EICOSANE PLATE AIR TEMP.

26

## FIG.16

# FIG.17

# FIG.18

# FIG.19

# FIG.20

# FIG. 21

LAMP

DETECTOR